(19) Europäisches Patentamt
European Patent Office
Office européen des brevets

(11) EP 4 139 721 B1

(12) EUROPEAN PATENT SPECIFICATION

(45) Date of publication and mention of the grant of the patent:
**22.07.2026 Bulletin 2026/30**

(21) Application number: **21720468.4**

(22) Date of filing: **22.04.2021**

(51) International Patent Classification (IPC):
***G02B 1/14*** *(2015.01)* ***C01B 33/141*** *(2006.01)*
***C08K 5/541*** *(2006.01)* ***G02B 1/04*** *(2006.01)*
***C09D 183/04*** *(2006.01)* ***B82Y 30/00*** *(2011.01)*
***G02C 7/02*** *(2006.01)* ***B82Y 40/00*** *(2011.01)*
***C08K 3/36*** *(2006.01)* ***C08K 5/06*** *(2006.01)*
***C08K 5/17*** *(2006.01)* ***C08K 9/02*** *(2006.01)*
***C09D 183/06*** *(2006.01)*

(52) Cooperative Patent Classification (CPC):
(C-Sets available)
**G02B 1/14; C01B 33/141; C08K 3/36; C08K 5/06; C08K 5/17; C08K 9/02; C09D 183/06; G02B 1/041;**
B82Y 30/00; B82Y 40/00; G02C 7/02 (Cont.)

(86) International application number:
**PCT/EP2021/060479**

(87) International publication number:
**WO 2021/214198 (28.10.2021 Gazette 2021/43)**

# (54) WATER BASED ANTI-ABRASION COATING

WASSERBASIERTE VERSCHLEISSSCHUTZBESCHICHTUNG

REVÊTEMENT ANTI-ABRASION À BASE D'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2020 EP 20305397**

(43) Date of publication of application:
**01.03.2023 Bulletin 2023/09**

(73) Proprietor: **Essilor International**
**94220 Charenton-Le-Pont (FR)**

(72) Inventors:
- **MORTREUX, Anaelle**
**94220 Charenton-Le-Pont (FR)**
- **HABASSI, Chefik**
**94220 Charenton-Le-Pont (FR)**
- **VANEECKHOUTTE, Philippe**
**94220 Charenton-Le-Pont (FR)**

(74) Representative: **Plasseraud IP**
**104 Rue de Richelieu**
**CS92104**
**75080 Paris Cedex 02 (FR)**

(56) References cited:
**EP-A1- 2 447 211**
**EP-A1- 3 138 871**
**EP-A1- 3 228 672**
**EP-A1- 3 382 429**
**JP-A- 2019 044 146**
**US-A1- 2002 022 682**
**US-A1- 2004 097 600**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/36, C08L 83/06;**
**C08K 5/06, C08L 83/06;**
**C08K 5/17, C08L 83/06;**
**C08K 9/02, C08L 83/06;**
**C09D 183/06, C08K 3/36;**
**C09D 183/06, C08K 5/17;**
**G02B 1/041, C08L 63/00, C08L 81/00;**
G02B 1/041, C08L 75/04, C08L 81/00

## Description

The present invention relates to an improved liquid coating composition for the deposition of anti-scratch and/or anti-abrasion coatings (hereafter referred to as "hard coatings") on optical articles such as lenses and in particular on optical articles made of plastics. The present invention also relates to optical articles bearing such hard coatings and to the process for making such articles.

Optical articles made of transparent plastics are nowadays broadly used. However such optical plastics have the drawback of being easily marred and scratched because of everyday contact with abrasives, such as dust, cleaning equipment and ordinary weathering. Such scratching and marring reduces the transparency of the optical plastics and therefore the visual comfort for users of optical articles made of optical plastics. Hard coatings have thus been developed to provide scratch and abrasion resistance to optical articles made of optical plastics and preserve their transparency.

Hard coatings on optical plastics are generally obtained through the deposition of a layer of a liquid hard coating composition on the surface of an optical article. The hard coating is obtained once the thus deposited liquid layer has been dried and cured. The deposition of a hard coating thus generally necessitates the use of solvents.

The solvents used industrially in liquid hard coating compositions are nowadays almost exclusively organic solvents. For instance, EP0614957 discloses the use of a mixture of methanol and 2-ethoxyethanol as a solvent for a liquid hard coating composition, while in US9957398 a mixture of 2-propanol and 1-methoxy-propan-2-ol is used.

For health and environmental reasons, it is desirable to be able to replace these organic solvents with water. However this is by no means a simple task.

Indeed, the quality of a hard coating depends on its mechanical properties (scratch and/or abrasion resistance) and on its optical properties, in particular transparency and the solvent in the liquid hard coating composition plays an important part in conferring the desired properties to the hard coating by at least,

- its influence on the solubility and/or the stability of the ingredients of the liquid hard coating composition;
- its surface tension, which will influence the wetting properties of the liquid hard coating composition on the surface of the optical article and the cracking behavior of the hard coating during the curing of the hard coating.

For example, if the ingredients in the liquid hard coating composition precipitate, resulting in the formation of large aggregates able to diffuse visible light efficiently the hard coating will lose in transparency. Similarly, if the deposited layer cracks, diffusion of visible light by the cracks will impair the transparency of the hard coating.

In general, it is desirable that the solvent of the liquid hard coating composition allows the deposition of a uniform and homogenous layer of liquid on the surface of the optical article and that this layer stays uniform and homogeneous throughout the curing of the hard coating.

US6399211 discloses liquid hard coating compositions comprising a mixture between a silane and a silica sol wherein aqueous silica sols are used instead of solvent based silica sols. However, in the compositions disclosed in US6399211, at least 15% of a "tail solvent" less volatile than water is added to the composition. Moreover, in addition to said tail solvent, the compositions of US6399211 comprise alcohol solvents originating from the hydrolysis of alkoxysilanes also present in the composition.

In US2002/0022682, similarly, in the storage stable liquid hard coating compositions disclosed, 7.63wt% of isopropanol relative to the total weight of the composition are added. Here also, in addition to the tail solvent, alcohol solvents originating from the hydrolysis of alkoxysilanes are present. In addition, US2002/0022682 also discloses a water-based liquid hard coating composition devoid of surfactants.

It is thus an object of the present invention to provide a liquid hard coating composition stable upon storage and that can be used to deposit a hard coating on the surface of an optical article presenting mechanical and optical properties equal or better than the reference hard coatings, wherein the amount of organic solvents is as small as possible and wherein the main solvent used is water.

Adhesion of a coating, for example a hard coating, on a substrate can be problematic. This is particularly the case when the optical article ages. Exposure to UV radiations from daylight is one of the most important factors that causes ageing leading to deteriorated adhesion properties of a coating, for example a hard coating, on the substrate of an optical article.

The insertion of a primer coating between the substrate and the hard coating can improve the resistance to ageing of the adhesion of a hard coating on a substrate. However this implies added costs in the manufacture of the optical article making effective primerless adhesion over time of a hard-coating on a substrate a desirable goal.

In particular, effective primerless adhesion over time of hard coatings on substrates made of thermosetting polythiourethane resins (which are commonly used high index optical plastics) while particularly desirable, is still difficult to achieve with available hard coatings compositions.

It is thus another object of the present invention to provide a liquid hard coating composition that can be used for the deposition of a hard coating with effective primerless adhesion over time on substrates made of thermosetting

polythiourethane resins.

It is the merit of the Applicant to have arrived to a liquid hard coating composition where the main solvent present is water and where organic solvent are only present in very limited amounts. Notably, apart from alcohol solvents originating from the hydrolysis of alkoxysilanes present in the liquid hard coating composition according to the invention, organic solvents represent less than 0.5wt% relative to the total weight of the composition.

The liquid hard coating compositions according to the invention are stable upon storage and easy to deposit on the surface of optical articles. They dry well and cure well and the resulting hard coatings present mechanical and optical properties equal to or better than that of the reference hard coatings.

One object of the present invention is a liquid hard coating composition according to claim 1.

Wherein, the composition comprises no organic solvents other than said water miscible organic solvent less volatile than water and other than organic solvents that are a product of the hydrolysis of the epoxyalkoxysilane.

Unless otherwise indicated, all numbers or expressions referring to quantities of ingredients, time intervals, ranges, reaction conditions, etc. used herein are to be understood as modified in all instances by the term "about."

After the deposition of a layer of the liquid hard coating composition according to the invention on the surface of an optical article, and after the subsequent curing of said layer, the product of the hydrolysis of the epoxyalkoxysilane of formula (I) and the cationic particles form a reticulated network in the hard coating wherein the hardness of the cationic particles provides resistance against fine scratches (abrasion resistance) to the hard coating while the suppleness of the organic network formed by the product of the hydrolysis of the epoxyalkoxysilane after curing provides resistance against large scratches (scratch resistance) to the hard coating.

As used herein, the terms "hard coating" refer to a coating obtained on the surface of an optical article after deposition of a layer of a liquid hard coating composition on the surface of the optical article, and the subsequent curing of said layer. Conversely, the terms "liquid hard coating composition" is used herein to refer to the liquid composition prior to its deposition on the optical article.

According to the invention, in the formula $SiXY_3$ of the epoxyalkoxysilane, preferred Y groups are methoxy ($-OCH_3$) or ethoxy ($-OCH_2CH_3$) groups or any mixture thereof. Preferred X groups have an organic link between the epoxy function and the silicon atom in $SiXY_3$ that provides a certain level of flexibility in order for the organic network formed by ingredient B after curing to present the adequate suppleness.

Examples of preferred X groups are the γ-glycidoxypropyl group of formula (II):

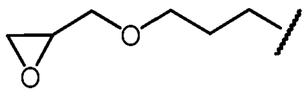

(II)

and the (3,4-epoxycyclohexyl)ethyl group of formula (III):

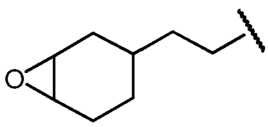

(III)

Examples of preferred epoxyalkoxysilanes useful for the present invention are γ-glycidoxypropyltrimethoxysilane (glymo), γ-glycidoxypropyltriethoxysilane, (3,4-epoxycyclohexyl)ethyltrimethoxysilane and (3,4-epoxycyclohexyl) ethyltriethoxysilane.

The hydrolysis of the epoxyalkoxysilane of formula (I) results in partial or total hydrolysis of the Si-Y bonds in the epoxyalkoxysilane of formula (I). A partial hydrolysis means that some Si-Y bonds can be retained in the product of hydrolysis of the epoxyalkoxysilane of formula (I). Preferably, the product of hydrolysis of the epoxyalkoxysilane of formula (I) is totally hydrolyzed.

Upon hydrolysis, the alkoxy groups Y linked to the silicon atom are hydrolyzed into the corresponding alcohols and the epoxysilane moieties give a mixture of epoxysilanols (by replacement of the Si-Y bonds with Si-OH bonds) and of oligomers of epoxysiloxanes (by condensation of epoxyalkoxysilane molecules and/or of epoxysilanols resulting in the replacement of Si-Y and/or Si-OH bonds with Si-O-Si bonds).

According to the invention, any mixture of epoxysilanols and/or oligomers of epoxysiloxanes that can be obtained by hydrolysis of an epoxyalkoxysilane of formula (I) are considered to be a product of hydrolysis of an epoxyalkoxysilane of formula (I).

Generally, in order to catalyze the hydrolysis of Si-Y bonds, an acid is used. In the liquid hard coating composition according to the invention, it is preferred that the acids used to catalyze the formation of the product of hydrolysis of the

epoxyalkoxysilane of formula (I) are present in the composition.

As such, the liquid hard coating composition according to the invention may comprise an inorganic Brønsted acid with a pKa in water at 25°C inferior to 3. Preferably, the inorganic Brønsted acid with a pKa in water at 25°C inferior to 3 is a strong acid in water.

Examples of inorganic Brønsted acids with a pKa in water at 25°C inferior to 3 that can be comprised in the liquid hard coating composition according to the invention include HCl, $HClO_4$, $HNO_3$, $H_2SO_4$ and $H_3PO_4$.

It is to be understood that when a composition comprises a Brønsted acid, it means that the composition comprises all the species resulting from the acid-base reactions involving said Brønsted acid in said composition.

Preferably, the amount of the inorganic Brønsted acid with a pKa in water at 25°C inferior to 3, such as an inorganic Brønsted acid which is strong in water, present in the liquid hard coating composition according to the invention is such that it introduces between 0.2 mmol and 1 mmol per 100 g of the composition of protons with a pKa in water at 25°C inferior to 3. For example, if the inorganic Brønsted acid in the composition is $H_3PO_4$, only one proton per $H_3PO_4$ has a pKa in water at 25°C inferior to 3 and the composition then preferably comprise between 0.2 mmol and 1 mmol per 100 g of the composition of $H_3PO_4$ molecules.

The equilibria governing the distribution of species in the product of hydrolysis of the epoxyalkoxysilane of formula (I) depend on the amount or proportion of water in the solvent and the nature and amount of the different chemical species able to modify the pH of the composition (such as the cationic particles or the inorganic non-hydrogen Lewis acid) present in the liquid hard coating composition.

It is preferred that the pH of the liquid hard coating composition according to the invention is comprised between 2 and 6, preferably between 3 and 5.

The cationic particles useful for the present invention are chosen so that a sol of the cationic particles dispersed in water is stable at acidic pH to ensure their compatibility with the rest of the liquid hard coating composition. Indeed, particles giving a sol unstable at acidic pH could be destabilized by the other acids present in the composition, e.g. the acid used for the hydrolysis of the epoxyalkoxysilane of formula (I) and the inorganic non-hydrogen Lewis acid.

As used herein a sol is a colloid comprising solid particles dispersed in a continuous liquid medium. In a stable sol, the mixture of the particles and the liquid medium must be one that does not settle or would take a very long time (at least a year) to settle appreciably.

In particular, the cationic particles do not settle or would take a very long time (at least a year) to settle appreciably in a liquid medium consisting essentially in water and at acidic pH.

In the cationic silica particles suitable for the present invention, the weight of silica in said cationic particles may be at least equal to 65% of the total weight of said cationic particles. For example, the weight of silica in said cationic particles can be at least equal to 80% of the total weight of said cationic particles. For example, the weight of silica in said cationic particles may be at least equal to 90% of the total weight of said cationic particles.

The Applicant has observed that, in order to obtain a hard coating devoid of cosmetic defects, the liquid hard coating composition according to the invention must comprise cationic particles.

In particular, when anionic particles are used in the liquid hard coating compositions according to the invention instead of the cationic particles, it results in cosmetic defects in the hard coatings (bad spreading of the liquid composition, grainy aspect of the hard coating, diffusion of visible light by the hard coating resulting in poor transparency of the optical article). This is the case even when dispersions of said anionic particles in water are stable at acidic pH.

The liquid hard coating composition according to the invention may be devoid of anionic particles. In one embodiment, in the liquid hard coating composition according to the invention, substantially all the particles comprised in the composition are cationic.

As used herein, the term "particle" refers to a three dimensional object wherein all three external dimensions of said object are of at least 1 nm. As used herein, the term "nanoparticle" refers to a three dimensional object wherein all three external dimensions of said object are comprised between 1 nm and 100 nm.

The cationic particles suitable for use in the present invention may comprise a silica core coated with a metal oxide. For example, said cationic particles may be cationic alumina-coated silica particles.

Examples of commercially available acidic sols comprising cationic particles suitable for use in the present invention include ST-AK, ST-AK-L, ST-AK-N, ST-AK-ML, ST-AK-XS and ST-AK-A (all provided by Nissan Chemical), Ludox CL and Ludox CL P (provided by Grace) and Levasil CT16 PCL (provided by Akzo Nobel).

The cationic particles have an approximately spherical shape whose size can be given by an average diameter. The average diameter of said cationic particles is comprised between 5 nm and 100 nm, for example between 20 nm and 100 nm. If particles with an average diameter above 100 nm are used, diffusion of visible light by the particles could result in impaired transparency of the hard coating. Preferably the average diameter of the cationic particles is comprised between 5 nm and 80 nm, for example between 20 nm and 80 nm. Even more preferably the average diameter of the cationic particles is comprised between 5 nm and 50 nm, for example between 20 nm and 50 nm.

Surprisingly, when the transmittance in the ultraviolet A region (wavelengths between 315 nm and 380 nm; hereafter UVA) of a 1 cm thick sample of a dispersion of the cationic particles in water, wherein the weight of the particles

represents 2% of the total weight of the dispersion (that is the weight of the particles plus the weight of the water in which the particles are dispersed), is below 40%, preferably below 20%, improved primerless adhesion over time (measured as the $Q_{sun}$ adhesion) of the hard coating on a substrate made of a thermosetting polythiourethane resin (such as thermosetting polythiourethane resin with a refractive index of 1.67) is observed.

An example of a commercially available dispersion with the above characteristics is ST-AK-ML (Nissan Chemical).

Since such a low transmittance in the UVA region has been observed by the Applicant for dispersions of cationic particles that were devoid of UV absorbing materials, the low transmittance is probably due to the scattering of the UVA radiations by particles having relatively large sizes such as the commercially available dispersion ST-AK-ML (Nissan Chemical).

Such a low transmittance can be obtained when the average diameter of the cationic particles is comprised between 20 nm and 100 nm, for example between 30 nm and 100 nm, for example between 40 nm and 100 nm, for example between 40 nm and 80 nm, for example between 40 nm and 50 nm.

When the liquid hard coating composition according to the invention comprises cationic particles having an average radius smaller than the ones described in the preceding paragraph, the improved primerless adhesion over time (measured as the $Q_{sun}$ adhesion) of the hard coating on a substrate made of a thermosetting polythiourethane resin (such as thermosetting polythiourethane resin with a refractive index of 1.67) can also be obtained if the composition comprises larger aggregates of the cationic particles.

In the liquid hard coating composition according to the invention the average size of the cationic particles or the presence of larger aggregates of the cationic particles can be adjusted to provide the desired primerless adhesion over time (measured as the $Q_{sun}$ adhesion) of the hard coating on a substrate made of a thermosetting polythiourethane resin (such as thermosetting polythiourethane resin with a refractive index of 1.67, for example that obtained from MR-7® monomers from Mitsui Toatsu Chemicals company) without degrading the transparency of the hard coating.

The liquid hard coating composition according to the invention comprising the cationic particles such that the transmittance in the UVA region of a 1 cm thick sample of a dispersion of said cationic particles in water, wherein the weight of the particles represents 2% of the total weight of the dispersion, is below 40% may further comprise a UV absorbing material, for example between 0.02wt% and 1wt% relative to the total weight of the composition of a UV absorbing material.

Said UV absorbing material may comprise inorganic nanoparticles, for example nanoparticles chosen from nanoparticles of titanium oxide, nanoparticles of zinc oxide, nanoparticles of cerium oxide and mixtures thereof. Examples of commercially available UV absorbing material suitable for use in liquid hard coating compositions according to the invention are the Nanobyk-3840 and Nanobyk-3860 dispersion provided by BYK.

The Applicant's results show that the cationic particles such that the transmittance in the UVA region of a 1 cm thick sample of a dispersion of said cationic particles in water, wherein the weight of the particles represents 2% of the total weight of the dispersion, is below 40% (for example the commercially available ST-AK-ML by Nissan Chemical), together with the UV absorbing material, for example between 0.02 wt% and 1wt% relative to the total weight of the composition of a UV absorbing material (for example, the commercially available Nanobyk-3840 and Nanobyk-3860 by BYK), have a positive synergistic effect on the primerless adhesion over time of hard coatings resulting from liquid hard coating compositions according to the invention on substrates made of a thermosetting polythiourethane resin (such as thermosetting polythiourethane resin with a refractive index of 1.67 for example that obtained from MR-7® monomers from Mitsui Toatsu Chemicals company).

It is supposed that, when particles able to scatter more of the UV light are present in the coating, UV light going through the coating has a higher chance to be absorbed by the UV absorber present in the coating since not only the UV rays directly hitting the UV absorber can be absorbed but also the UV rays hitting the UV absorber after having been scattered by the particles.

In the hard coatings resulting from the deposition of a layer of the liquid hard coating composition on the surface of an optical article followed by curing, the epoxyalkoxysilane can form various intermolecular bonds:

- the Si-O-Si bonds found in the polysiloxane oligomers,
- Si-O-M bonds formed by condensation of the Si-Y moieties in the epoxyalkoxysilane with M-OH moieties at the surface of the cationic particles, wherein M is any metal or metalloid atom present at the surface of the cationic particles and
- ether bonds resulting from the opening of the epoxy functions present in the X groups by another already opened epoxy ring present in another X group.

The formation of said ether bonds via opening of the epoxy rings results in the reticulation of the organic network in the hard coating. The mechanical properties of the hard coating depend, among other things, on the topology of said reticulation.

The topology of said reticulation depends on a number of factors among which: the speed of the curing, the extent

of the reaction (proportion of epoxy rings opened at the end of the curing among all the epoxy rings initially present in the composition) and the amount of ring opening resulting from the reaction between an epoxyalkoxysilane moiety and other nucleophiles, for example water molecules.

In order to control said topology of said reticulation, a catalyst catalyzing the opening of the epoxy functions can be used.

The Applicant has found that hard coatings with the required properties were obtained when an inorganic non-hydrogen Lewis acid was added to the liquid hard coating composition.

In particular, Applicant has found that, when the inorganic non-hydrogen Lewis acid in the liquid hard coating compositions according to the invention is replaced with either itaconic acid or 2-cyanoguanidine, insufficient abrasion resistance or unstable liquid compositions are obtained. When the inorganic non-hydrogen Lewis acid in the liquid hard coating compositions according to the invention is replaced with Lewis acids comprising organic ligands, such as aluminum acetylacetonate ($Al(acac)_3$), unsatisfactory results are also obtained due to the lack of solubility of said Lewis acids comprising organic ligands in the liquid hard coating compositions according to the invention.

The inorganic non-hydrogen Lewis acid suitable for use in the invention may be an inorganic salt of a multivalent metal ion (for example, aluminum(III), zinc(II) or ytterbium(III) or mixtures thereof). For example, the inorganic non-hydrogen Lewis acid suitable for use in the invention may be chosen from the group consisting of aluminum(III) chloride ($AlCl_3$), aluminum(III) trifluoromethanesulfonate ($Al(OTf)_3$); aluminum(III) perchlorate ($Al(ClO_4)_3$), zinc(II) trifluoromethanesulfonate ($Zn(OTf)_2$), ytterbium(III) trifluoromethanesulfonate ($Yb(OTf)_3$), and mixtures thereof. Preferably, the inorganic non-hydrogen Lewis acid in the liquid hard coating compositions according to the invention does not contain carbon hydrogen bonds. Preferably, the inorganic non-hydrogen Lewis acid is an inorganic salt of aluminum(III), for example aluminum(III) perchlorate ($Al(ClO_4)_3$).

In order to allow the deposition (e.g. by dip coating or spin coating) of a homogeneous layer of controlled thickness of a liquid hard coating composition on the surface of an optical article, good wetting of the surface of the optical article by the composition must be ensured. Similarly, care must also be taken that no unwanted dewetting of said layer or other unwanted capillary effects happen during the subsequent curing of said layer.

Since the surface tension of water is much higher than the surface tension of the organic solvents commonly used in liquid hard coating compositions (e.g. acetone, methanol, ethanol, isopropanol) the replacement of said organic solvents by water in the liquid hard coating compositions according to the invention involves difficulties when spreading and curing the composition on the surface of an optical article.

The merit of the Applicant is to have solved this problem by identifying the need for adding a surfactant to the composition and the properties that should be met by said surfactant in order to obtain good wetting of the surface of the optical article during the entirety of the spreading and curing of the layer of the liquid hard coating composition on the surface of the optical article.

A liquid hard coating composition according to the invention thus comprises a surfactant such that a water solution of 15wt% relative to the total weight of the solution of said surfactant in water exhibits a static surface tension below 25mN/m at a temperature of 20°C.

Preferably, the amount of surfactant is comprised between 0.02wt% and 0.2wt% relative to the total weight of the liquid hard coating composition.

The surfactant suitable for use in the present invention may be a block or graft copolymer of dimethylsiloxane and alkylene oxide. In one embodiment, the surfactant comprises molecules comprising a fluorocarbon moiety. In one embodiment the liquid hard coating composition according to the invention is devoid of any molecules comprising a fluorocarbon moiety.

Examples of commercially available surfactants suitable for use in liquid hard coating compositions according to the invention are BYK347, BYK348 and BYK3455 provided by BYK, Borchi Gol LA50 by OMG Borchers, Capstone FS35 by DuPont and Megaface F477 by DIC.

One technique known in the art to reduce cosmetic defects in hard coatings involves adding to a liquid hard coating composition a tail solvent that evaporates last when the deposited layer of the liquid hard coating composition is cured (see e.g. US6399211).

The liquid hard coating composition according to the invention may comprise an added solvent less volatile than water that acts as a tail solvent.

However, whereas in US6399211, tail solvents make up for at least 15wt% relative to the total weight of the liquid hard coating composition, the Applicant has found that it is possible to add only very limited amounts of a tail solvent in liquid hard coating compositions according to the invention and still observe a very good quality of the hard coating.

Preferably, the liquid hard coating compositions according to the invention, comprises less than 0.5wt%, for example between 0.01wt% and 0.5wt%, more preferably less than 0.1wt%, for example between 0.01wt% and 0.1wt%, of a water miscible organic solvent less volatile than water, the amount of said water miscible organic solvent less volatile than water being expressed relative to the total weight of the composition.

Preferably, said water miscible solvent less volatile than water is a propylene glycol ether is of formula (IV):

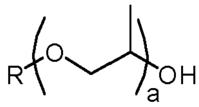

(IV)

wherein

R is a methyl, an ethyl, a propyl or a butyl group,
a is 2 or 3.

For example, said water miscible solvent less volatile than water is dipropylene glycol n-butyl ether.

Liquid hard coating compositions according to the invention do not comprise organic solvents other than said water miscible organic solvent less volatile than water and other than organic solvents that are a product of the hydrolysis of the epoxyalkoxysilane of formula (I).

As defined herein, the solvents that are a product of the hydrolysis of the epoxyalkoxysilane of formula (I) are an amount of YH molecules no greater than three times the amount of SiX moieties in the composition comprised in the product of hydrolysis of the epoxyalkoxysilane of formula (I).

For example, there should not be more YH molecules in the liquid hard coating composition according to the invention than three times the amount of SiX moieties in the composition and there should be no other organic solvents in the composition than said water miscible organic solvent less volatile than water and said YH molecules.

As defined herein, $E_{eq}$, the equivalent weight of epoxyalkoxysilane in the composition, is the weight of the molar amount of epoxyalkoxysilane needed to obtain the product of hydrolysis of the epoxyalkoxysilane present in the composition minus the weight of the Y groups in said molar amount of epoxyalkoxysilane.

For example, $E_{eq}$ can be calculated from the molar amount of SiX moieties (irrespective of whether the epoxy group in X is opened or not) in the composition multiplied by the molar mass of the epoxyalkoxysilane of formula (I) minus the molar mass of the three Y groups.

Preferably, the sum of the equivalent weight of epoxyalkoxysilane ($E_{eq}$), the weight of the cationic particles and the weight of the inorganic non-hydrogen Lewis acid:

$$W_S = \{E_{eq} + \text{weight of the cationic particles} + \text{weight of the inorganic non-hydrogen Lewis acid}\}$$

is comprised between 10% and 60%, for example between 20% and 35% of the total weight of the liquid hard coating composition.

Preferably, the liquid hard coating composition according to the invention comprises at least 20wt% of water relative to the total weight of the liquid hard coating composition.

Preferably,

$E_{eq}$ is comprised between 45% and 65% of $W_S$,
the weight of the cationic particles is comprised between 30% and 50% of $W_S$ and
the weight of the inorganic non-hydrogen Lewis acid is comprised between 0.1% and 2% of $W_S$.

More preferably,

$E_{eq}$ is comprised between 52% and 62% of $W_S$,
the weight of the cationic particles is comprised between 37% and 47% of $W_S$ and
the weight of the inorganic non-hydrogen Lewis acid is comprised between 0.2% and 1.5% of $W_S$.

The Applicant has observed that, when the liquid hard coating composition comprises the cationic particles with an average diameter comprised between 20 nm and 50 nm, for example between 30 nm and 50 nm, for example between 40 and 50 nm, if the weight of the cationic particles is below 30% of $W_S$, the primerless adhesion over time (measured as the $Q_{sun}$ adhesion) of the hard coating on a substrate made of a thermosetting polythiourethane resin (such as thermosetting polythiourethane resin with a refractive index of 1.67) with respect to a reference hard coating is not as improved as with higher amounts of cationic particles.

The invention also relates to a method of preparation of liquid hard coating composition according to claim 7.

In the method above, it is to be understood that ingredients A, B, C and D can be added in any order and simultaneously or not during step (ii).

During step (i) of the method above, hydrolysis of the epoxyalkoxysilane of formula (I) occurs. Preferably, the hydrolysis of the epoxyalkoxysilane of formula (I) in step (i) is total. Preferably, in step (i), the molar amount of water added to the mixture is at least equal to the molar amount of groups Y in the epoxyalkoxysilane of formula (I).

What has been said about the epoxyalkoxysilane of formula (I), the product of hydrolysis of which is comprised in the liquid hard coating composition described before also applies concerning the epoxyalkoxysilane of formula (I) hydrolyzed in step (i) of the method above.

What has been said about the inorganic Brønsted acid with a pKa in water at 25°C inferior to 3 that can be comprised in the liquid hard coating composition described before also applies concerning the inorganic Brønsted acid with a pKa in water at 25°C inferior to 3 in step (i) of the method above.

In step (i), the amount of the inorganic Brønsted acid introduced is such that the amount of protons with a pKa in water at 25°C inferior to 3 added is comprised between 0.2 mmol and 1 mmol per 100 g of the final liquid hard coating composition according to the invention.

The Applicant has found that stable liquid hard coating compositions could be obtained when the hydrolysis of the epoxyalkoxysilane of formula (I) is carried out prior to its mixing with the other ingredients of the composition, for example through the mixing of said epoxyalkoxysilane with a water solution of an inorganic Brønsted acid with a pKa in water at 25°C inferior to 3 in step (i) of the method above. On the contrary, the Applicant has observed that the direct mixing of the epoxyalkoxysilane of formula (I) with an acidic sol followed by the addition of an inorganic non-hydrogen Lewis acid resulted in the formation of large aggregates incompatible with the deposition of a hard coating with acceptable properties.

Preferably, the temperature of the reaction mixture during step (i) of the method above is maintained below 50°C, more preferably below 40°C.

What has been said about the cationic particles comprised in the liquid hard coating composition described before also applies concerning the cationic particles comprised in the acidic sol added in step (ii) of the method above.

Preferably, the acidic sol (ingredient A) is mixed in step (ii) with the product of step (i) before any other ingredients.

Preferably, the acidic sol is substantially devoid of anionic particles. More preferably, substantially all the particles comprised in the acidic sol are cationic particles.

As used herein, the terms "solids content" correspond to the weight of non-volatile material contained in a given mixture. In other words, it is the weight of the material left after the volatile solvents have vaporized. The solids content of a sol includes both the weight of the suspended solids and the weight of the dissolved non volatile matter if any is present (for example salts). The solids content of the acidic sol (ingredient A) comprises the weight of the cationic particles and of their counterions. Typically, the solid content of the acidic sol is very close to the weight of the particles.

In the acidic sol (ingredient A) suitable for use in the method above, the weight of silica in the acidic sol may be at least equal to 65% of the solids content of the acidic sol. For example, the weight of silica in the acidic sol may be at least equal to 80% of the solids content of the acidic sol. For example, the weight of silica in the acidic sol may be at least equal to 90% of the solids content of the acidic sol.

In the method above, when the transmittance in the ultraviolet A region (wavelengths between 315 nm and 380 nm; hereafter UVA) of a 1 cm thick sample of a 2wt% water dispersion of the cationic particles comprised in the acidic sol (ingredient A), is below 40%, preferably below 20%, or when the cationic particles comprised in the acidic sol (ingredient A) have an average diameter comprised between 20 nm and 100 nm, for example between 30 nm and 100 nm, for example between 40 nm and 100 nm, for example between 40 nm and 80 nm, for example between 40 nm and 50 nm, a UV absorbing material may be added to the product of step (i) after, before or together with the ingredients to be mixed in step (ii) (ingredients A, B, C and D), for example between 0.02wt% and 1wt% relative to the total weight of the composition of a UV absorbing material may be added to the product of step (i) after, before or together with the ingredients to be mixed in step (ii) (ingredients A, B, C and D).

Said UV absorbing material may comprise inorganic nanoparticles, for example nanoparticles chosen from nanoparticles of titanium oxide, nanoparticles of zinc oxide, nanoparticles of cerium oxide and mixtures thereof.

What has been said about the inorganic non-hydrogen Lewis acid, about the surfactant and about the water miscible organic solvent less volatile than water comprised in the liquid hard coating composition described before also applies concerning the inorganic non-hydrogen Lewis acid, about the surfactant and about the water miscible organic solvent less volatile than water added to the composition in the method above.

The water miscible organic solvent less volatile than water suitable for use in the present invention may be added to the composition together with the surfactant.

As defined herein, E', the equivalent weight of epoxyalkoxysilane in the method, is the weight of the amount of epoxyalkoxysilane of formula (I) introduced in step (i) minus the weight of the Y groups in said amount of epoxyalkoxysilane.

In the method above, the sum of the equivalent weight of epoxyalkoxysilane (E'), the weight of the cationic particles added in step (ii) and the weight of the inorganic non-hydrogen Lewis acid added in step (ii):

$$W' = \{E' + \text{weight of the cationic particles} + \text{weight of the inorganic non-hydrogen Lewis acid}\}$$

may be comprised between 10% and 60%, for example between 20% and 35% of the weight of the final composition.

Preferably,

E' is comprised between 45% and 65% of W',
the weight of the cationic particles is comprised between 30% and 50% of W' and
the weight of the inorganic non-hydrogen Lewis acid is comprised between 0.1% and 2% of W'.

More preferably,

E' is comprised between 52% and 62% of W',
the weight of the cationic particles is comprised between 37% and 47% of W' and
the weight of the inorganic non-hydrogen Lewis acid is comprised between 0.2% and 1.5% of W'.

The optical article according to the invention comprises a substrate bearing a hard coating obtained by deposition of a layer of the liquid hard coating composition according to the invention and the subsequent curing of said layer.

The optical article according to the present invention is a transparent optical article, preferably an optical lens or lens blank, and more preferably an ophthalmic lens or lens blank. The optical article is coated on its front surface, rear surface, or both surfaces with the hard coating according to the invention.

As used herein, the rear surface of the substrate is intended to mean the surface which, when using the article, is the nearest from the wearer's eye. It is generally a concave surface. On the contrary, the front surface of the substrate is the surface which, when using the article, is the most distant from the wearer's eye. It is generally a convex surface. The optical article can also be a plano lens.

Herein, the term "lens" comprises a lens substrate, which may be coated with one or more coatings of various natures.

The term "ophthalmic lens" is used to mean a lens adapted to a spectacle frame to protect the eye and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, window glazings etc.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

A substrate, in the sense of the present invention, should be understood to mean an uncoated substrate, and generally has two main surfaces. The substrate may in particular be an optically transparent material having the shape of an optical article, for example an ophthalmic lens destined to be mounted in glasses. In this context, the term "substrate" is understood to mean the base constituent material of the optical article and more particularly of the ophthalmic lens. This material acts as support for a stack of one or more coatings.

The substrate according to the invention may be made of optical plastic. The optical plastic can be either thermoplastic materials such as polycarbonates and thermoplastic polyurethanes or thermosetting materials such as diethylene glycol bis(allylcarbonate) polymers and copolymers, thermosetting polyurethanes, pol-ythiourethanes, polyepoxides, polyepisulfides, such as those having a refractive index of 1.74, poly(meth)acrylates and copolymers based substrates, such as substrates comprising (meth)acrylic polymers and copolymers derived from bisphenol-A, polythio(meth)acrylates, as well as copolymers thereof and blends thereof.

Preferred materials for the substrate according to the invention are diethylene glycol bis(allylcarbonate) polymers (in particular CR-39® from PPG Industries) and thermosetting polythiourethane resins, for example thermosetting polythiourethane resins having a refractive index of 1.60 or 1.67 such as these, which are obtained from monomers marketed by the Mitsui Toatsu Chemicals company as MR series, in particular MR-6®, MR-7® and MR-8® resins.

Prior to depositing the hard coating on the optical article according to the invention, the surface of the optical article is usually submitted to a physical or chemical surface activating and cleaning treatment, so as to improve the adhesion of the hard coating, such as disclosed in WO2013/013929.

In order to enhance the adhesion of the hard coating on the optical article according to the invention and/or in order to enhance the impact resistance of the optical article according to the invention, primer coatings may also be deposited on the surface of the optical article, preferably immediately before the deposition of the hard coating. The primer

coating is then in direct contact with the hard coating.

The primer coating can be deposited on the surface of the optical article in the following way:

(1) on the surface of the optical article, application of layer of a liquid primer composition;
(2) curing the optical article obtained in stage (1) at a temperature of between 50°C and 150°C, preferably between 70°C and 110°C, for a period of time of between 2 minutes and 4 hours, preferably between 10 minutes and 3.5 hours.

In stage (1), the primer composition can be deposited on the surface of the optical article by any appropriate technique, for example by spin coating, dip coating, spray coating, brush coating, roller coating or flow coating. Spin coating and dip coating are preferred.

The curing stage (2) may be carried out in two phases: a precuring phase at a temperature of between 70 and 80°C, preferably at 75°C, for a period of time of between 10 and 20 minutes, preferably 15 minutes, followed by a film-forming phase at a temperature of between 90 and 110°C, preferably at 100°C, for a period of time of between 2.5 hours and 3.5 hours, preferably 3 hours.

After the curing stage, the thickness of the primer coating is between 0.2 and 5 μm, preferably between 0.5 and 1.5 μm.

Preferred liquid primer compositions are compositions based on polyurethanes and compositions based on latexes, in particular polyurethane latexes, poly(meth)acrylic latexes and polyester latexes, as well as any combination of these latexes. The liquid primer composition may comprise colloidal fillers. For example, the liquid primer composition may comprise a polyurethane latex, an inorganic colloidal filler such as silica nanoparticles, surfactant and water as solvent.

Preferred primer coatings thus comprise polyurethane and an inorganic filler, such as silica nanoparticles.

The Applicant has found that those embodiments of the optical article according to the invention comprising the hard coating according to the invention and a primer coating comprising polyurethane and an inorganic filler such as silica nanoparticles, very surprisingly present an exceptional impact resistance (as measured through the ball drop test or BAD test) far above usual impact resistances for optical articles such as ophthalmic lenses, even when they are coated with the same primer coating.

When an optical article comprises one or more coatings, the phrase "to deposit a coating or layer on the surface of the optical article" means that a coating or layer is deposited onto the outermost coating of the optical article, i.e. the coating which is the closest to the air if any coating is present or otherwise onto the surface of the bare substrate.

A coating that is "on" one surface of an optical article is defined as a coating that (a) is positioned over that surface, (b) need not be in contact with that surface, i.e. one or more intervening coatings may be disposed between that surface and the coating in question, and (c) need not cover that surface completely.

Several functional coatings may be deposited on the surface of the optical article according to the invention in addition to the hard coating and optionally of a primer coating. Such functional coatings improve the optical and/or mechanical properties of the optical article. The functional coatings used herein can be selected from, without limitation to these coatings, an antireflection coating, a polarized coating, a photochromic coating, an antistatic coating, an anti-fouling coating (hydrophobic and/or oleophobic coating), an antifog coating, a precursor of an antifog coating or a stack made of two or more such coatings.

The process for the manufacturing of an optical article according to the invention comprises:

(i) Providing an optical article comprising a substrate having at least one main surface,
(ii) Optionally depositing on said surface a primer coating,
(iii) Depositing on the optical article surface, a layer of a liquid hard coating composition according to the invention,
(iv) Curing the optical article resulting from step (iii) so as to obtain a cured hard coating.

The layer of liquid hard coating compositions may be deposited, without limitation, by spin coating, dip coating, spray coating, brush coating, roller coating or flow coating. Spin coating and dip coating are preferred.

The curing step is performed by heating between 70°C and 110°C and comprises evaporation of the solvents, solidification and cross-linking of the reactive epoxy compounds.

Preferably, the curing step is carried out in two phases: a precuring phase at a temperature of between 70 and 80°C, preferably at 75°C, for a period of time of between 10 and 20 minutes, preferably 15 minutes, followed by a film-forming phase at a temperature of between 90 and 110°C, preferably at 100°C, for a period of time of between 2.5 hours and 3.5 hours, preferably 3 hours.

The thickness of the cured hard coating may be adapted to the specific application required and generally ranges from 0.5 to 50 μm, preferably from 1 to 20 μm or 1 to 10 μm, more preferably from 1.5 to 10 μm, even more preferably from 2 to 5 μm. The coating thickness can be easily adjusted by modifying the solvent concentration of the claimed compositions and the coating conditions, for example the withdrawal speed in case of deposition by dip coating. The lower the withdrawal speed, the thinner the final dry coating is.

## Testing methods

- Transmittance measurements were performed with methods known in the art. The cuvettes containing the solutions on which the measurements were performed had a length of 1cm.

- Surface tension measurements were performed at a temperature of 20°C using the Wilhelmy plate method (Kruss K100).

- Abrasion resistance ("Bayer sand test")

The Bayer sand test was conducted in accordance with the ASTM Standard F 735. The higher the Bayer sand test value the stronger the abrasion resistance is.

In brief, the convex surface of the article (i.e. the lens) was subjected to abrasion in an oscillating abrasive box using sand (approximately 1000 g) for 1 cycle of 300 forward and back motions. An amount or degree of abrasion was measured by the change in haze of the article (measured with a hazemeter). Performance results were expressed as the ratio of the haze for a reference lens to the haze for a modified lens, (Bayer value = haze of the standard / haze of the sample).

- Scratch resistance ("Hand Steel Wool test", hereafter HSW)

The HSW test was implemented on the convex side of the lens only. If an anti-reflective coating is deposited on the lens, a waiting time of 24 hours after the deposition of said anti-reflective coating is respected before performing the test.

The lens was manually abraded with extra fine (000#) steel wool, performing 5 back and forth movements (with an amplitude from 4 to 5 cm) keeping constant pressure on the steel wool with the index finger. The pressure applied on the steel wool can be evaluated with a balance: fix the lens on the balance plate with adhesive tape and press down the lens with the index finger with the same strength as the one used when abrading the lens with the steel wool. This strength is about 5 kg during the forward movements and about 2.5 kg during the backward movements. Lenses were visually inspected and given a HSW value according to the following table. The higher the HSW value, the more abraded the lens is.

| Number of scratches | > 50 | 11 to 50 | ≤10 |
|---|---|---|---|
| HSW value | 5 | 3 | 1 |
| Acceptation Threshold | Fail | Pass | Pass |

- Transmission in the visible range ($T_v$)

The $T_v$ factor, also called "luminous transmission" of the system, is such as defined in the ASTM D1003-13 and relates to an average in the 380-780 nm wavelength range that is weighted according to the sensitivity of the eye at each wavelength of the range and measured under D65 illumination conditions.

The light transmission factor in the visible spectrum $T_v$ was measured in transmission mode using a UV/Vis/NIR spectrophotometer (Perkin Elmer), with the back (concave) side of the lens (2 mm thickness at the center) facing the detector and light incoming on the front side of the lens.

- Yellowness index ($Y_i$)

The yellowness index of the lens is measured in accordance with standard ASTM D-1925. The yellowness index is defined as follows:

$$Y_i = \frac{100(1.28\, X_{CIE} - 1.06\, Z_{CIE})}{Y_{CIE}}$$

where $X_{CIE}$, $Y_{CIE}$ and $Z_{CIE}$ are the trichromatic coordinates of the lens. $X_{CIE}$, $Y_{CIE}$ and $Z_{CIE}$ are measured using a Cary 50 UV-visible spectrophotometer.

- UV ageing and adhesion ($Q_{sun}$ adhesion test)

A Crosshatch adhesion test was performed on the lenses without specific conditioning of the lenses (test called "dry adhesion") and after having submitted the lenses to UV ageing for periods of time ranging from 40h to 160h ($Q_{sun}$ adhesion test proper).

The Crosshatch Adhesion test is performed on coated lenses by cutting a grid of 25 x 1mm squares using a tool that has six parallel razor blades 1mm apart. The grid must be cut into the coating at least 5 to 10mm from the edge of the lens. Then, using 3M 250 tape having nominal adhesion on steel equal to 710 cN/cm (by ASTM D-3330 method A), a piece of tape that has not been exposed to air is removed from the roll and applied uniformly to the grid using a plastic spatula with approximately 15 to 20mm of tape off of the edge of the lens. The tape is quickly removed from the lens with a sharp, rapid continuous movement. This is repeated 5 times on the same grid. A score of 0 refers to no coating loss. A score of 1 refers to less than one half of one square of coating loss. Any loss of coating greater than one half of one square is considered a failure.

If the dry adhesion test failed, then the Qsun adhesion test was not conducted.

UV ageing was performed in a xenon test chamber Q-SUN ® Xe-3 from Q-LAB at a relative humidity of 20% (± 5%) and at a temperature of 23°C (± 5°C). The lens was introduced in the chamber and the convex side was exposed to the light. The lens was exposed to UV during 40h and then subjected to the Crosshatch test. If the lens passed the test, it was subjected again to 40h UV exposure, etc. until 160h.

- Resistance to heat-induced crazing (critical temperature)

The heat resistance test is performed either one week or one month after the preparation of the lenses. The prepared lenses were put into an oven preheated to a selected temperature, and were left there for 1 hour. They were removed from the oven and visually evaluated by reflection in terms of the presence of cracks under a desk lamp. This experiment was performed at different temperatures, starting from 40° C. and raising the heating temperature in 5° C. increments. The temperature was measured, at which the lenses could not withstand the heat treatment and were cracked after 1 hour. This temperature is given as the critical temperature $T_c$ in table 4 below.

- Impact resistance (FDA drop ball test)

The impact resistance of the lenses is tested according to FDA drop ball test (ANSI Z87.1-1989 standard), wherein a series of 50 lenses are submitted to the impact of a 16 g ball dropped from a height of 1.27 m. From this series the number of fractured lenses gives a probability of fracture at 200 mJ.

The impact strength of the lenses is evaluated by dropping an impactor at the center of the convex face of each glass. The change in the acceleration of the impactor during contact with the glass makes it possible to determine the fracture energy of the glass. The mean fracture energy (FE, in mJ) and the minimum fracture energy (FE) are determined for each series of 50 lenses.

Examples

Preparation of a liquid hard coating composition according to the invention:

During the whole procedure, the reaction mixture is stirred by means of mechanical stirrer in a glass vessel. 5.61 parts of a 0.1N solution of HCl are added dropwise to 24.53 parts of γ-glycidoxypropyltrimethoxysilane. The temperature of the reaction mixture is maintained below 40°C during this addition. After the addition of the 0.1N solution of HCl is complete, the reaction mixture is left until it reaches room temperature. An acidic sol comprising cationic particles is then added to the mixture (amounts such that 10.9 parts of the solids content of the sol are introduced in the composition) and the mixture is left at room temperature for 30 minutes. $Al(ClO_4)_3$ (0.2 parts), surfactant Borchi Gol LA50 (0.15 parts), optionally a UV absorber and deionized water to complete the final composition to 100 parts are then added to the mixture. The mixture is then left 60 min at room temperature and filtered on a 3μ polypropylene filter (Sartorius) to give a ready to use liquid hard coating composition. For optimal conservation, the liquid hard coating composition is stored at 5°C.

Borchi Gol LA50 provided by OMG Borchers is a 50w% solution of a graft copolymer of dimethylsiloxane and alkylene oxide in dipropylene glycol n-butyl ether. A 15wt% water solution of the graft copolymer contained in Borchi Gol LA50 exhibits a static surface tension of 23mN/m at a temperature of 20°C.

Eleven samples were prepared (L1 to L11) with three different acidic sols and two different UV absorbers (see table 1).

Table 1

| Sample | Acidic sol | Particles diameter | UV absorber | UV absorber content |
|---|---|---|---|---|
| L1 | ST-AK-ML | 45 nm | - | - |
| L2 | ST-AK-ML | 45 nm | Nanobyk 3840 | 0.4 parts |
| L3 | ST-AK-ML | 45 nm | Nanobyk 3840 | 0.8 parts |
| L4 | ST-AK-ML | 45 nm | Nanobyk 3860 | 0.4 parts |
| L5 | ST-AK-ML | 45 nm | Nanobyk 3860 | 0.8 parts |
| L6 | CT16 PCL | 17 nm | - | - |
| L7 | CT16 PCL | 17 nm | Nanobyk 3840 | 0.4 parts |
| L8 | CT16 PCL | 17 nm | Nanobyk 3840 | 0.8 parts |
| L9 | CT16 PCL | 17 nm | Nanobyk 3860 | 0.4 parts |
| L10 | CT16 PCL | 17 nm | Nanobyk 3860 | 0.8 parts |
| L11 | ST-AK | 12.5 nm | - | - |

Acidic sols

ST-AK-ML is an acidic (pH 3-5) dispersion of cationic alumina-coated silica particles in water with a solids content of 30% of the total weight of the dispersion provided by Nissan Chemical.

ST-AK is an acidic (pH 3-5) dispersion of cationic alumina-coated silica particles in water with a solids content of 20% of the total weight of the dispersion provided by Nissan Chemical.

ST-AK-ML and ST-AK both comprise more than 83wt% silica and less than 17wt% aluminum relative to the solids content of the dispersion.

Levasil CT16 PCL is an acidic (pH 3-4) dispersion of cationic alumina-coated silica particles in water with a solids content of 30% of the total weight of the dispersion provided by AkzoNobel.

The transmittance in the UVA region of a 1 cm thick sample of ST-AK-ML diluted with water to 2wt% in solids content is 16% whereas the same measurement on diluted samples of ST-AK and CT16 PCL gives values of 45% and 49% respectively.

The average diameter of the particles in these three acidic sols is reported in table 1.

When the procedure above is reproduced using acidic sols comprising anionic particles, such as ST-OS, ST-O-40 or ST-OL provided by Nissan Chemical or Levasil CT16 PDL provided by AkzoNobel, instead of the acidic sol comprising cationic particles, the coatings resulting from the liquid compositions present cosmetic defects like a grainy aspect, spreading defects for the liquid composition and poor transparency of the coating).

UV Absorbers

NANOBYK®-3840 provided by BYK is a 40wt% water dispersion of ZnO particles with a 40nm average diameter.

NANOBYK®-3860 provided by BYK is a 50wt% water dispersion of ZnO particles with a 40nm average diameter.

The amounts listed in Table 1 correspond to amounts by weight of the dispersion comprising the ZnO particles and the water.

Preparation of a reference liquid hard coating composition (not according to the invention):

During the whole procedure, the reaction mixture is stirred by means of mechanical stirrer in a glass vessel. 6.62 parts of a 0.1N solution of HCl are added dropwise to 18.6 parts of γ-glycidoxypropyltrimethoxysilane. The temperature of the reaction mixture is maintained below 40°C during this addition. After the addition of the 0.1N solution of HCl is complete, 9.73 parts of dimethyldiethoxysilane are added dropwise. Care is taken during this addition to maintain the temperature of the reaction mixture below 50°C. The reaction mixture is left at room temperature for 20 hours to 24 hours. 60.1 parts of silica sol MA-ST (provided by Nissan Chemical) are then added to the mixture and the mixture is again left at room temperature for 30 minutes. Methylethylketone (3.65 parts), $Al(acac)_3$ (1.2 parts) and surfactant EFKA3034 (0.1 parts; provided by BASF) are then added to the mixture. The mixture is then left 60 min at room temperature and filtered on a 3μ polypropylene filter (Sartorius) to give a ready to use liquid hard coating composition.

MA-ST is an acidic (pH 2-4) methanol dispersion of silica particles (average diameter 12.5 nm) with a solids

content of 30% of the total weight of the dispersion. The transmittance in the UVA region of a 1 cm thick sample of MA-ST diluted with methanol to 2wt% in solids content is 68%.

Preparation of the coated articles:

The optical articles used in the examples were round lenses (plano or -2.00 with a diameter of 68 mm) comprising an ORMA® substrate (obtained by polymerizing CR-39® diethylene glycol bis(allylcarbonate) monomer) or a polythiourethane substrate obtained by polymerizing MR7® from Mitsui Toatsu Chemicals (hereafter MR7 substrate).

The convex surface of the substrate was first corona treated and then optionally spin-coated with a primer composition yielding a primer coating of 1 μm thickness after curing (precuring: 15 minutes at 75°C; film forming: 3 hours at 100°C). The convex surface of the optical article was then spin-coated with a liquid hard coating composition. The liquid hard coating composition provides, upon curing, a functional transparent hard coating of thickness 2.6 μm having abrasion and/or scratch resistance (precuring: 15 minutes at 75°C; film forming: 3 hours at 100°C).

Procedures for the anti-reflective coatings

Two different antireflective coatings were used. These coatings were deposited on the surface of the article after the deposition of a hard coating.

Antireflective coating I (Crizal Forte® disclosed in EP2524798) comprises alternating layers of $ZrO_2$ and $SiO_2$ is vacuum deposited on the convex surface.

Antireflective coating II (such as disclosed in EP2033021) comprises alternating layers of $ZrO_2$ and $SiO_2$+$Al_2O_3$.

Procedure for the anti-fouling coatings

Two different anti-fouling coatings were used. These coatings were deposited on the surface of the article after the deposition of an antireflective coating.

Antifouling coating I is a hydrophobic and oleophobic top coat of thickness 2-5 nm. It is vacuum deposited by evaporation under vacuum of a modified perfluoropolyether (OPTOOL® DSX by Daikin, described in US6183872) on the convex surface of the optical article.

Antifouling coating II is as antifouling coating II except twice as thick.

The reference primer composition is an aqueous dispersion (dry extract weight: 17 %) comprising a polyurethane latex (U5200 from Alberdingk Boley, 76 % of the dry extract weight of the composition) and colloidal silica (Bindzil CC401 from Eka chemicals, 23 % of the dry extract weight of the composition) and a surfactant (L77 from De Sangosse, 1 % of the dry extract weight composition).

The optical articles prepared with an ORMA® substrate are described in table 2.

Table 2

| Sample | S1 | S2 | S3 | cS1 | cS2 | cS3 | cS4 |
|---|---|---|---|---|---|---|---|
| Primer | - | Ref. | Ref. | - | Ref. | Ref. | Ref. |
| Hard coating | L1 | L1 | L1 | Ref. | Ref. | Ref. | Ref. |
| Anti-reflective coating | - | - | I | - | - | I | II |
| Anti-fouling coating | - | - | I | - | - | I | II |

Optical articles cS1, cS2, cS3, and cS4 are not according to the invention.

The optical articles prepared with an MR7 substrate are described in table 3.

Table 3

| Sample | mS1 | mS2 | mS3 | mS4 | mS5 | mS6 | mS7 | mS8 | mS9 | mS10 | mS11 | cmS1 |
|---|---|---|---|---|---|---|---|---|---|---|---|---|
| Primer | - | - | - | - | - | - | - | - | - | - | - | - |
| Hard coating | L1 | L2 | L3 | L4 | L5 | L6 | L7 | L8 | L9 | L10 | L11 | Ref. |

Optical article cmS1 is not according to the invention.

## Results of the tests

The results of the tests performed on the optical articles prepared with an ORMA® substrate are reported in table 4.

Table 4

| Sample | S1 | S2 | S3 | cS1 | cS2 | cS3 | cS4 |
|---|---|---|---|---|---|---|---|
| Bayer sand | 4.2 | 4.0 | 4.6 | 4.1 | 4.5 | 4.7 | - |
| HSW | 3 | 3 | - | 3 | 3 | - | - |
| $T_v$ | 92.5 | 92.3 | 96.6 | 92.7 | 92.8 | 96.9 | - |
| $Y_i$ | 1.0 | 1.5 | 1.9 | 0.9 | 1.2 | 2.0 | - |
| $Q_{sun}$ (80 hours) | OK | OK | - | OK | OK | - | - |
| $T_c$ 1 week (°C) | - | - | 50 | - | - | 60 | - |
| $T_c$ 1 month (°C) | - | - | 50 | - | - | 50 | - |
| $FE_{mean}$ (mJ) | - | - | 3400 | - | - | - | 280 |
| $FE_{min}$ (mJ) | - | - | 1300 | - | - | - | 250 |

Bayer sand, $T_v$ and $Y_i$ values were measured on plano lenses, the other tests were performed on -2.00 lenses.

These results show that the performances of optical articles bearing hard coatings according to the invention are as satisfying as those of optical articles bearing reference hard coatings.

Moreover sample S3 shows an exceptional impact resistance much higher than the impact resistance of the reference sample cS4.

The tests performed on S1 and cS1 have also been performed on mS1 and cmS1 and are equally satisfactory except for the $Q_{sun}$ adhesion test.

The results of the Bayer sand test for mS6 and mS11 are slightly better than what is obtained with mS1 but the $Q_{sun}$ adhesion for mS6 and mS11 is degraded compared to mS1.

The results of the $Q_{sun}$ adhesion test performed on the optical articles prepared with an MR7 substrate are reported in table 5 and 6.

Table 5

| Sample | mS1 | | | mS6 | | | cmS1 | | |
|---|---|---|---|---|---|---|---|---|---|
| UV exposure time | t0 | 40h | 80h | t0 | 40h | 80h | t0 | 40h | 80h |
| Exp 1 | OK | fail | fail | OK | fail | fail | OK | fail | fail |
| Exp 2 | OK | OK | fail | OK | fail | fail | OK | fail | fail |
| Exp 3 | OK | fail | fail | OK | fail | fail | OK | fail | fail |
| Exp 4 | OK | OK | fail | OK | fail | fail | OK | fail | fail |

Table 5 shows the results of four repeat experiments (exp 1, exp 2, exp 3, exp 4) for three different samples at three different exposure times. Clearly mS1 shows improved $Q_{sun}$ adhesion compared to the reference sample cmS1 and compared to sample mS6 where the cationic particles are smaller and the transmittance of the sol in the UVA region is higher.

Table 6

| Sample | t0 | 40h | 80h | 120h | 160h |
|---|---|---|---|---|---|
| **mS1** | OK | OK | fail | fail | fail |
| **mS2** | OK | OK | OK | OK | OK |
| **mS3** | OK | OK | OK | OK | OK |
| **mS4** | OK | OK | OK | OK | OK |

(continued)

| Sample | t0 | 40h | 80h | 120h | 160h |
|---|---|---|---|---|---|
| **mS5** | OK | OK | OK | OK | OK |
| **mS6** | OK | fail | fail | fail | fail |
| **mS7** | OK | fail | fail | fail | fail |
| **mS8** | OK | fail | fail | fail | fail |
| **mS9** | OK | fail | fail | fail | fail |
| **mS10** | OK | fail | fail | fail | fail |

Table 6 shows that adding either Nanobyk 3840 or Nanobyk 3860 to the composition enhances considerably the $Q_{sun}$ adhesion properties of the resulting optical articles when the composition comprises larger particles with lower transmittance in the UVA region (samples mS2 to mS5). On the other hand, the adjunction of Nanobyk 3840 or Nanobyk 3860 has no noticeable effect when the composition comprises smaller particles with higher transmittance in the UVA region (samples mS7 to mS10).

## Claims

1. A liquid hard coating composition comprising the following ingredients:

(i) The product of hydrolysis of an epoxyalkoxysilane of formula (I): $SiXY_3$, wherein the X group represents a monovalent organic group linked to the silicon atom through a carbon atom and containing at least one epoxy function and the Y groups are identical or different and represent alkoxy groups linked to the silicon atom in formula (I), preferably wherein the Y groups in formula (I) are methoxy or ethoxy groups or any mixture thereof and wherein the X group is of formula (II):

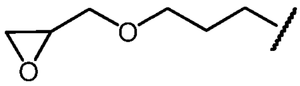

(II)

or of formula (III):

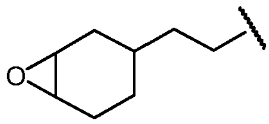

(III),

more preferably wherein the epoxyalkoxysilane of formula (I) is γ-glycidoxypropyltrimethoxysilane (glymo);
(ii) Cationic particles with an average diameter comprised between 5 nm and 100 nm, wherein a sol of said cationic particles dispersed in water is stable at acidic pH and wherein said cationic particles comprise silica, preferably said cationic particles are cationic alumina-coated silica particles;
(iii) An inorganic non-hydrogen Lewis acid, preferably the inorganic non-hydrogen Lewis acid is an inorganic salt of a multivalent metal ion, more preferably wherein said multivalent metal ion is aluminum(III);
(iv) A surfactant such that a water solution of 15wt% of said surfactant relative to the total weight of said water solution exhibits a static surface tension below 25mN/m at a temperature of 20°C measured using the Wilhelmy plate method, preferably said surfactant is a block or graft copolymer of dimethylsiloxane and alkylene oxide;
(v) Less than 0.5wt% relative to the total weight of the composition of a water miscible organic solvent less volatile than water;

Wherein, the composition comprises no organic solvents other than said water miscible organic solvent less volatile than water and other than organic solvents that are a product of the hydrolysis of the epoxyalkoxysilane.

2. The composition according to claim 1, wherein the transmittance in the ultraviolet A region, corresponding to

wavelengths between 315 nm and 380 nm, of a 1 cm thick sample of a dispersion of the cationic particles in water, wherein the weight of the particles represents 2% of the total weight of said dispersion, is below 40%.

**3.** The composition according to claim 2 further comprising between 0.02wt% and 1wt% of a UV absorbing material, relative to the total weight of the composition; preferably the UV absorbing material comprises inorganic nanoparticles, more preferably said inorganic nanoparticles are chosen from nanoparticles of titanium oxide, nanoparticles of zinc oxide, nanoparticles of cerium oxide and mixtures thereof.

**4.** The composition according to any of the preceding claims, comprising between 0.01wt% and 0.5wt% relative to the total weight of the composition of the water miscible organic solvent less volatile than water; preferably wherein the water miscible solvent less volatile than water is a propylene glycol ether is of formula (IV):

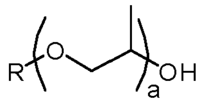 (IV)

Wherein

R is a methyl, an ethyl, a propyl or a butyl group and
a is 2 or 3.

**5.** The composition according to any of the preceding claims, wherein:

- the sum $W_S$ = {$E_{eq}$ + weight of the cationic particles + weight of the inorganic non-hydrogen Lewis acid} is comprised between 10% and 60% of the total weight of the composition, wherein $E_{eq}$ is the weight of the amount of epoxyalkoxysilane of formula (I) needed to obtain the amount of product of hydrolysis of the epoxyalkoxysilane of formula (I) present in the composition minus the weight of the Y groups in said amount of epoxyalkoxysilane; preferably wherein
- $E_{eq}$ is comprised between 45% and 65% of $W_S$,
- the weight of the cationic particles is comprised between 30% and 50% of $W_S$ and
- the weight of the inorganic non-hydrogen Lewis acid is comprised between 0.1% and 2% of $W_S$; more preferably wherein
- $W_S$ is comprised between 20% and 35% of the total weight of the composition,
- $E_{eq}$ is comprised between 52% and 62% of $W_S$,
- the weight of the cationic particles is comprised between 37% and 47% of $W_S$ and
- the weight of the inorganic non-hydrogen Lewis acid is comprised between 0.2% and 1.5% of $W_S$.

**6.** The composition according to any of the preceding claims, wherein the pH of the final composition at 25°C is comprised between 2 and 6; preferably between 3 and 5.

**7.** A method for the preparation of a liquid hard coating composition comprising the following steps:

(i) In a separate container, the mixing of a water solution of an inorganic Brønsted acid with a pKa in water at 25°C inferior to 3 with an epoxyalkoxysilane of formula (I): $SiXY_3$, wherein the X group represents a monovalent organic groups linked to the silicon atom through a carbon atom and containing at least one epoxy function and the Y groups are identical or different and represent alkoxy groups linked to the silicon atom in formula (I), preferably the epoxyalkoxysilane of formula (I) is γ-glycidoxypropyltrimethoxysilane;
(ii) The mixing of the product of step (i) with

a. an acidic sol comprising cationic particles with an average diameter comprised between 5 nm and 100 nm that are dispersed in water, wherein the cationic particles comprise of silica, preferably said cationic particles are cationic alumina-coated silica particles,
b.an inorganic non-hydrogen Lewis acid, preferably said inorganic non-hydrogen Lewis acid is an inorganic salt of aluminum(III),
c. a surfactant such that a water solution of 15wt% of said surfactant relative to the total weight of said water solution exhibits a static surface tension below 25mN/m at a temperature of 20°C measured using the Wilhelmy plate method, preferably said surfactant is a block or graft copolymer of dimethylsiloxane and

alkylene oxide and

d.less than 0.5wt% relative to the total weight of the final composition of a water miscible organic solvent less volatile than water, preferably wherein the water miscible solvent less volatile than water is a propylene glycol ether of formula (IV):

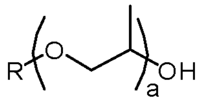
(IV)

wherein R is a methyl, an ethyl, a propyl or a butyl group and a is 2 or 3;

wherein no organic solvents other than said water miscible organic solvent less volatile than water and other than the organic solvents that may result from the hydrolysis of the epoxyalkoxysilane of formula (I) are introduced; preferably wherein the temperature of the reaction mixture during step (i) is maintained below 40°C, more preferably wherein, the molar amount of water added to the mixture in step (i) is at least equal to the molar amount of groups Y in the epoxyalkoxysilane of formula (I).

**8.** The method according to claim 7, wherein the transmittance in the ultraviolet A region, corresponding to wavelengths between 315 nm and 380 nm, of a 1 cm thick sample of a dispersion of the cationic particles in water, wherein the weight of the particles represents 2% of the total weight of said dispersion, is below 40%; more preferably wherein the method further comprises the addition after step (ii), of a UV absorbing material, even more preferably wherein the UV absorbing material comprises inorganic nanoparticles chosen from nanoparticles of titanium oxide, nanoparticles of zinc oxide, nanoparticles of cerium oxide and mixtures thereof.

**9.** The method according to claim 7 or 8 wherein:

- the sum W' = {E' + weight of the cationic particles + weight of the inorganic non-hydrogen Lewis acid} is comprised between 20% and 35% of the weight of the final composition, wherein E' is the weight of the amount of epoxyalkoxysilane of formula (I) introduced in step (i) minus the weight of the Y groups in said amount of epoxyalkoxysilane;
preferably wherein
- E' is comprised between 45% and 65% of W',
- the weight of the cationic particles is comprised between 30% and 50% of W' and
- the weight of the inorganic non-hydrogen Lewis acid is comprised between 0.1% and 2% of W'; more preferably wherein
- E' is comprised between 52% and 62% of W',
- the weight of the cationic particles is comprised between 37% and 47% of W' and
- the weight of the inorganic non-hydrogen Lewis acid is comprised between 0.2% and 1.5% of W'.

**10.** The method according to any one of claims 7 to 9, wherein the amount of inorganic Brønsted acid with a pKa in water at 25°C inferior to 3 to be mixed with the epoxyalkoxysilane of formula (I) in step (i) is such that it introduces between 0.2 mmol and 1 mmol per 100 g of the final composition of protons with a pKa in water at 25°C inferior to 3.

**11.** An optical article comprising a substrate bearing a hard coating obtainable by curing the composition according to any one of claims 1 to 6, wherein the substrate comprises an optical plastic, preferably wherein the optical plastic is a diethylene glycol bis(allylcarbonate) polymer, a thermosetting polythiourethane resin having a refractive index of 1.60 or a thermosetting polythiourethane resin having a refractive index of 1.67.

**12.** The optical article according to claim 11, wherein the article comprises a primer coating on which the hard coating is directly deposited, said primer coating comprising polyurethane and an inorganic filler; preferably wherein said inorganic filler comprises silica nanoparticles.

**13.** The optical article according to claim 11 or 12, wherein the article further comprises at least one anti-reflective coating on the surface of the hard coating, preferably wherein the article further comprises at least one anti-fouling coating on the surface of said anti-reflective coating.

**14.** The optical article according to any of claims 11 to 13, wherein the optical article is an ophthalmic lens.

## Patentansprüche

1. Flüssige Hartbeschichtungszusammensetzung umfassend die folgenden Bestandteile:

   (i) das Hydrolyseprodukt eines Epoxyalkoxysilans der Formel (I): $SiXY_3$, wobei die X-Gruppe eine einwertige organische Gruppe darstellt, die über ein Kohlenstoffatom an das Siliciumatom gebunden ist und wenigstens eine Epoxyfunktion enthält, und die Y-Gruppen identisch oder verschieden sind und Alkoxygruppen darstellen, die an das Siliciumatom in Formel (I) gebunden sind, wobei die Y-Gruppen in Formel (I) vorzugsweise Methoxy- oder Ethoxygruppen oder ein beliebiges Gemisch davon sind und wobei die X-Gruppe die Formel (II):

   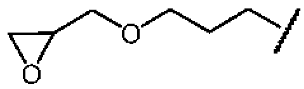 (II)

   oder die Formel (III) aufweist:

   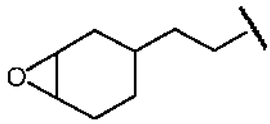 (III),

   wobei bevorzugter das Epoxyalkoxysilan der Formel (I) γ-Glycidoxypropyltrimethoxysilan (Glymo) ist;
   (ii) kationische Partikel mit einem mittleren Durchmesser, der in dem Bereich zwischen 5 nm und 100 nm liegt, wobei ein Sol der kationischen Partikel, die in Wasser dispergiert sind, bei saurem pH-Wert stabil ist und wobei die kationischen Partikel Siliciumdioxid umfassen, wobei die kationischen Partikel vorzugsweise kationische aluminiumoxidbeschichtete Siliciumdioxidpartikel sind;
   (iii) eine anorganische Nichtwasserstoff-Lewissäure, wobei die anorganische Nichtwasserstoff-Lewissäure vorzugsweise ein anorganisches Salz eines mehrwertigen Metallions ist, wobei das mehrwertige Metallion bevorzugter Aluminium(III) ist;
   (iv) ein Tensid, so dass eine Wasserlösung von 15 Gew.-% des Tensids, bezogen auf das Gesamtgewicht der Wasserlösung, eine statische Oberflächenspannung unter 25 mN/m bei einer Temperatur von 20 °C, gemessen unter Verwendung des Wilhelmy-Plattenverfahrens, aufweist, wobei das Tensid vorzugsweise ein Block- oder Pfropfcopolymer aus Dimethylsiloxan und Alkylenoxid ist;
   (v) weniger als 0,5 Gew.-%, bezogen auf das Gesamtgewicht der Zusammensetzung, an einem wassermischbaren organischen Lösungsmittel, das weniger flüchtig als Wasser ist;

   wobei die Zusammensetzung keine anderen organischen Lösungsmittel als das wassermischbare organische Lösungsmittel, das weniger flüchtig als Wasser ist, und andere als organische Lösungsmittel, die ein Hydrolyseprodukt des Epoxyalkoxysilans sind, umfasst.

2. Zusammensetzung nach Anspruch 1, wobei die Transmittanz in dem Ultraviolett-A-Bereich, der Wellenlängen zwischen 315 nm und 380 nm entspricht, einer 1 cm dicken Probe einer Dispersion der kationischen Partikel in Wasser, wobei das Gewicht der Partikel 2 % des Gesamtgewichts der Dispersion darstellt, unter 40 % liegt.

3. Zusammensetzung nach Anspruch 2, ferner umfassend zwischen 0,02 Gew.-% und 1 Gew.-% an einem UVabsorbierenden Material bezogen auf das Gesamtgewicht der Zusammensetzung; wobei das UV-absorbierende Material vorzugsweise anorganische Nanopartikel umfasst, wobei die anorganischen Nanopartikel bevorzugter ausgewählt sind aus Nanopartikeln von Titanoxid, Nanopartikeln von Zinkoxid, Nanopartikeln von Ceroxid und Gemischen davon.

4. Zusammensetzung nach einem der vorstehenden Ansprüche, umfassend zwischen 0,01 Gew.-% und 0,5 Gew.-%, bezogen auf das Gesamtgewicht der Zusammensetzung, an dem wassermischbaren organischen Lösungsmittel, das weniger flüchtig als Wasser ist; wobei das wassermischbare Lösungsmittel, das weniger flüchtig als Wasser ist, vorzugsweise ein Propylenglycolether der Formel (IV) ist:

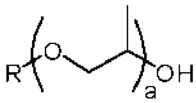 (IV)

wobei
R eine Methyl-, Ethyl-, Propyl- oder Butylgruppe ist und a ist 2 oder 3 ist.

**5.** Zusammensetzung nach einem der vorstehenden Ansprüche, wobei:

- die Summe $W_S$ = {$E_{eq}$ + Gewicht der kationischen Partikel + Gewicht der anorganischen Nichtwasserstoff-Lewissäure} in dem Bereich zwischen 10 % und 60 % des Gesamtgewichts der Zusammensetzung beträgt, wobei $E_{eq}$ das Gewicht der Menge an Epoxyalkoxysilan der Formel (I) ist, die benötigt wird, um die Menge an Hydrolyseprodukt des in der Zusammensetzung vorhandenen Epoxyalkoxysilans der Formel (I) abzüglich des Gewichts der Y-Gruppen in der Menge von Epoxyalkoxysilan zu erhalten;
vorzugsweise wobei
- $E_{eq}$ in dem Bereich zwischen 45 % und 65 % von $W_S$ liegt,
- das Gewicht der kationischen Partikel in dem Bereich zwischen 30 % und 50 % von $W_S$ liegt und
- das Gewicht der anorganischen Nichtwasserstoff-Lewissäure in dem Bereich zwischen 0,1 % und 2 % von $W_S$ liegt;
bevorzugter wobei
- $W_S$ in dem Bereich zwischen 20 % und 35 % des Gesamtgewichts der Zusammensetzung liegt,
- $E_{eq}$ in dem Bereich zwischen 52 % und 62 % von $W_S$ liegt,
- das Gewicht der kationischen Partikel in dem Bereich zwischen 37 % und 47 % von $W_S$ liegt und
- das Gewicht der anorganischen Nichtwasserstoff-Lewissäure in dem Bereich zwischen 0,2 % und 1,5 % von $W_S$ liegt.

**6.** Zusammensetzung nach einem der vorstehenden Ansprüche, wobei der pH-Wert der fertigen Zusammensetzung bei 25 °C in dem Bereich zwischen 2 und 6; vorzugsweise zwischen 3 und 5, liegt.

**7.** Verfahren zur Herstellung einer flüssigen Hartbeschichtungszusammensetzung, umfassend die folgenden Schritte:

(i) in einem gesonderten Behälter Mischen einer Wasserlösung einer anorganischen Brønsted-Säure mit einem pKa-Wert in Wasser bei 25 °C unter 3 mit einem Epoxyalkoxysilan der Formel (I): $SiXY_3$, wobei die X-Gruppe einwertige organische Gruppen darstellt, die über ein Kohlenstoffatom an das Siliciumatom gebunden sind und wenigstens eine Epoxyfunktion enthalten, und die Y-Gruppen gleich oder verschieden sind und Alkoxygruppen darstellen, die an das Siliciumatom in Formel (I) gebunden sind, wobei das Epoxyalkoxysilan der Formel (I) vorzugsweise γ-Glycidoxypropyltrimethoxysilan ist;
(ii) Mischen des Produkts von Schritt (i) mit
a. einem sauren Sol, das kationische Partikel mit einem mittleren Durchmesser in dem Bereich zwischen 5 nm und 100 nm umfasst, die in Wasser dispergiert sind, wobei die kationischen Partikel Siliciumdioxid umfassen, wobei die kationischen Partikel vorzugsweise kationische aluminiumoxidbeschichtete Siliciumdioxidpartikel sind,
b. einer anorganischen Nichtwasserstoff-Lewissäure, wobei die anorganische Nichtwasserstoff-Lewissäure vorzugsweise ein anorganisches Salz von Aluminium(III) ist,
c. einem Tensid, so dass eine Wasserlösung von 15 Gew.-% des Tensids, bezogen auf das Gesamtgewicht der Wasserlösung, eine statische Oberflächenspannung unter 25 mN/m bei einer Temperatur von 20 °C, gemessen unter Verwendung des Wilhelmy-Plattenverfahrens, aufweist, wobei das Tensid vorzugsweise ein Block- oder Pfropfcopolymer aus Dimethylsiloxan und Alkylenoxid ist; und
d. weniger als 0,5 Gew.-%, bezogen auf das Gesamtgewicht der Endzusammensetzung, an einem wassermischbaren organischen Lösungsmittel, das weniger flüchtig als Wasser ist, wobei das wassermischbare Lösungsmittel, das weniger flüchtig als Wasser ist, vorzugsweise ein Propylenglycolether der Formel (IV) ist:

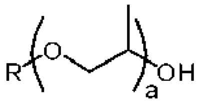 (IV)

wobei R eine Methyl-, Ethyl-, Propyl- oder Butylgruppe ist und a 2 oder 3 ist;
wobei keine anderen organischen Lösungsmittel als das wassermischbare organische Lösungsmittel, das weniger flüchtig als Wasser ist, und keine anderen als die organischen Lösungsmittel, die aus der Hydrolyse des Epoxyalkoxysilans der Formel (I) erhalten sein können, eingeführt werden; wobei vorzugsweise die Temperatur des Reaktionsgemischs bei Schritt (i) unter 40 °C gehalten wird, bevorzugter wobei die molare Menge an Wasser, die dem Gemisch bei Schritt (i) zugesetzt wird, wenigstens gleich der molaren Menge an Gruppen Y in dem Epoxyalkoxysilan der Formel (I) ist.

**8.** Verfahren nach Anspruch 7, wobei die Transmittanz in dem Ultraviolett-A-Bereich, der Wellenlängen zwischen 315 nm und 380 nm entspricht, einer 1 cm dicken Probe einer Dispersion der kationischen Partikel in Wasser, wobei das Gewicht der Partikel 2 % des Gesamtgewichts der Dispersion darstellt, unter 40 % liegt; wobei das Verfahren bevorzugter ferner die Zugabe eines UVabsorbierenden Materials nach Schritt (ii) umfasst, wobei das UV-absorbierende Material noch bevorzugter anorganische Nanopartikel ausgewählt aus Nanopartikeln von Titanoxid, Nanopartikeln von Zinkoxid, Nanopartikeln von Ceroxid und Gemischen davon umfasst.

**9.** Verfahren nach Anspruch 7 oder 8, wobei:

- die Summe W' = {E' + Gewicht der kationischen Partikel + Gewicht der anorganischen Nichtwasserstoff-Lewissäure} in dem Bereich zwischen 20 % und 35 % des Gewichts der Endzusammensetzung liegt, wobei E' das Gewicht der bei Schritt (i) eingeführten Menge an Epoxyalkoxysilan der Formel (I) minus dem Gewicht der Y-Gruppen in der Menge an Epoxyalkoxysilan ist; vorzugsweise wobei
- E' in dem Bereich zwischen 45 % und 65 % von W' liegt,
- das Gewicht der kationischen Partikel in dem Bereich zwischen 30 % und 50 % von W' liegt und
- das Gewicht der anorganischen Nichtwasserstoff-Lewissäure in dem Bereich zwischen 0,1 % und 2 % von W' liegt;

bevorzugter wobei
- E' in dem Bereich zwischen 52 % und 62 % von W' liegt,
- das Gewicht der kationischen Partikel in dem Bereich zwischen 37 % und 47 % von W' liegt und
- das Gewicht der anorganischen Nichtwasserstoff-Lewissäure in dem Bereich zwischen 0,2 % und 1,5 % von W' liegt.

**10.** Verfahren nach einem der Ansprüche 7 bis 9, wobei die Menge an anorganischer Brønsted-Säure mit einem pKa-Wert in Wasser bei 25 °C unter 3, die mit dem Epoxyalkoxysilan der Formel (I) bei Schritt (I) zu mischen ist, so ist, dass sie zwischen 0,2 mmol und 1 mmol pro 100 g der fertigen Zusammensetzung an Protonen mit einem pKa in Wasser bei 25 °C unter 3 einführt.

**11.** Optischer Gegenstand umfassend ein Substrat, das eine Hartbeschichtung trägt, die durch Härten der Zusammensetzung nach einem der Ansprüche 1 bis 6 erhältlich ist, wobei das Substrat einen optischen Kunststoff umfasst, wobei der optische Kunststoff vorzugsweise ein Diethylenglycolbis(allylcarbonat)-Polymer, ein duroplastisches Polythiourethanharz mit einem Brechungsindex von 1,60 oder ein duroplastisches Polythiourethanharz mit einem Brechungsindex von 1,67 ist.

**12.** Optischer Gegenstand nach Anspruch 11, wobei der Gegenstand eine Grundierungsbeschichtung umfasst, auf der die Hartbeschichtung direkt abgeschieden ist, wobei die Grundierungsbeschichtung Polyurethan und einen anorganischen Füllstoff umfasst; wobei der anorganische Füllstoff vorzugsweise Siliciumdioxid-Nanopartikel umfasst.

**13.** Optischer Gegenstand nach Anspruch 11 oder 12, wobei der Gegenstand ferner wenigstens eine Antireflexbeschichtung auf der Oberfläche der Hartbeschichtung umfasst, wobei der Gegenstand vorzugsweise ferner wenigstens eine Antibelagbeschichtung auf der Oberfläche der Antireflexbeschichtung umfasst.

**14.** Optischer Gegenstand nach einem der Ansprüche 11 bis 13, wobei der optische Gegenstand eine ophthalmische Linse ist.

## Revendications

**1.** Composition liquide de revêtement dur comprenant les ingrédients suivants :

(i) le produit d'hydrolyse d'un époxyalcoxysilane de formule (I) : $SiXY_3$, dans laquelle le groupe X représente un groupe organique monovalent lié à l'atome de silicium par un atome de carbone et contenant au moins une fonction époxy et les groupes Y sont identiques ou différents et représentent des groupes alcoxy liés à l'atome de silicium dans la formule (I), de préférence dans laquelle les groupes Y dans la formule (I) sont des groupes méthoxy ou éthoxy ou un mélange quelconque de ceux-ci et dans laquelle le groupe X est de formule (II) :

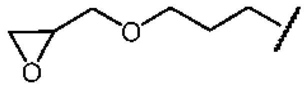
(II)

ou de formule (III) :

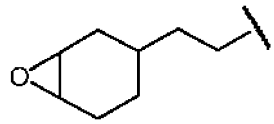
(III),

plus préférentiellement dans laquelle l'époxyalcoxysilane de formule (I) est le γ-glycidoxypropyltriméthoxysilane (glymo) ;
(ii) des particules cationiques ayant un diamètre moyen compris entre 5 nm et 100 nm, dans laquelle un sol desdites particules cationiques dispersées dans l'eau est stable à pH acide et dans laquelle lesdites particules cationiques comprennent de la silice, de préférence lesdites particules cationiques sont des particules cationiques de silice revêtues d'alumine ;
(iii) un acide de Lewis inorganique non hydrogéné, de préférence l'acide de Lewis inorganique non hydrogéné est un sel inorganique d'un ion métallique multivalent, plus préférentiellement dans laquelle ledit ion métallique multivalent est l'aluminium (III) ;
(iv) un tensioactif tel qu'une solution aqueuse de 15 % en poids en ledit tensioactif par rapport au poids total de ladite solution aqueuse présente une tension superficielle statique inférieure à 25 mN/m à une température de 20 °C mesurée au moyen de la méthode de la plaque de Wilhelmy, de préférence ledit tensioactif est un copolymère séquencé ou greffé de diméthylsiloxane et d'oxyde d'alkylène ;
(v) moins de 0,5 % en poids, par rapport au poids total de la composition, d'un solvant organique miscible à l'eau moins volatil que l'eau ;

dans laquelle la composition ne comprend pas de solvants organiques autres que ledit solvant organique miscible à l'eau moins volatils que l'eau et autres que les solvants organiques qui sont un produit de l'hydrolyse de l'époxyalcoxysilane.

**2.** Composition selon la revendication 1, dans laquelle la transmittance dans la région des ultraviolets A, correspondant à des longueurs d'onde comprises entre 315 nm et 380 nm, d'un échantillon de 1 cm d'épaisseur d'une dispersion des particules cationiques dans l'eau, dans laquelle le poids des particules représente 2 % du poids total de ladite dispersion, est inférieure à 40 %.

**3.** Composition selon la revendication 2 comprenant en outre entre 0,02 % en poids et 1 % en poids d'un matériau absorbant les UV, par rapport au poids total de la composition ; de préférence le matériau absorbant les UV comprend des nanoparticules inorganiques, plus préférentiellement lesdites nanoparticules inorganiques sont choisies parmi les nanoparticules d'oxyde de titane, les nanoparticules d'oxyde de zinc, les nanoparticules d'oxyde de cérium et leurs mélanges.

**4.** Composition selon l'une quelconque des revendications précédentes, comprenant entre 0,01 % en poids et 0,5 % en poids par rapport au poids total de la composition du solvant organique miscible à l'eau moins volatil que l'eau ; de préférence, dans laquelle le solvant miscible à l'eau moins volatil que l'eau est un éther de propylène glycol de formule (IV) :

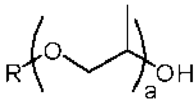
(IV)

dans laquelle
R représente un groupe méthyle, éthyle, propyle ou butyle, et a représente 2 ou 3.

**5.** Composition selon l'une quelconque des revendications précédentes, dans laquelle :

- la somme $W_S$ = {$E_{éq}$ + poids des particules cationiques + poids de l'acide de Lewis inorganique non hydrogéné} est comprise entre 10 % et 60 % du poids total de la composition, dans laquelle $E_{éq}$ représente le poids de la quantité d'époxyalcoxysilane de formule (I) nécessaire pour obtenir la quantité de produit d'hydrolyse de l'époxyalcoxysilane de formule (I) présent dans la composition moins le poids des groupes Y dans ladite quantité d'époxyalcoxysilane ;
de préférence dans laquelle
- $E_{éq}$ est compris entre 45 % et 65 % de $W_S$,
- le poids des particules cationiques est compris entre 30 % et 50 % de $W_S$ et
- le poids de l'acide de Lewis inorganique non hydrogéné est compris entre 0,1 % et 2 % de $W_S$ ;
plus préférentiellement dans lequel
- $W_S$ est comprise entre 20 % et 35 % du poids total de la composition,
- $E_{éq}$ est compris entre 52 % et 62 % de $W_S$,
- le poids des particules cationiques est compris entre 37 % et 47 % de $W_S$ et
- le poids de l'acide de Lewis inorganique non hydrogéné est compris entre 0,2 % et 1,5 % de $W_S$.

**6.** Composition selon l'une quelconque des revendications précédentes, dans laquelle le pH de la composition finale à 25 °C est compris entre 2 et 6 ; de préférence entre 3 et 5.

**7.** Procédé de préparation d'une composition liquide de revêtement dur comprenant les étapes suivantes :

(i) dans un récipient séparé, le mélange d'une solution aqueuse d'un acide de Brønsted inorganique avec un pKa dans de l'eau à 25°°C inférieur à 3 avec un époxyalcoxysilane de formule (I) : $SiXY_3$, dans lequel le groupe X représente des groupes organiques monovalents liés à l'atome de silicium par un atome de carbone et contenant au moins une fonction époxy et les groupes Y sont identiques ou différents et représentent des groupes alcoxy liés à l'atome de silicium dans la formule (I), de préférence l'époxyalcoxysilane de formule (I) est le γ-glycidoxypropyltriméthoxysilane ;
(ii) le mélange du produit de l'étape (i) avec
a. un sol acide comprenant des particules cationiques de diamètre moyen compris entre 5 nm et 100 nm qui sont dispersées dans l'eau, dans lequel les particules cationiques comprennent de la silice, de préférence lesdites particules cationiques sont des particules cationiques de silice revêtues d'alumine,
b. un acide de Lewis inorganique non hydrogéné, de préférence ledit acide de Lewis inorganique non hydrogéné est un sel inorganique d'aluminium (III),
c. un tensioactif tel qu'une solution aqueuse de 15 % en poids en ledit tensioactif par rapport au poids total de ladite solution aqueuse présente une tension superficielle statique inférieure à 25 mN/m à une température de 20 °C mesurée au moyen de la méthode de la plaque de Wilhelmy, de préférence ledit tensioactif est un copolymère séquencé ou greffé de diméthylsiloxane et d'oxyde d'alkylène ;
d. moins de 0,5 % en poids par rapport au poids total de la composition finale d'un solvant organique miscible à l'eau moins volatil que l'eau, de préférence dans lequel le solvant miscible à l'eau moins volatil que l'eau est un éther de propylène glycol de formule (IV) :

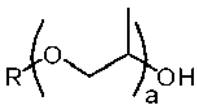
(IV)

dans lequel R représente un groupe méthyle, éthyle, propyle ou butyle, et a représente 2 ou 3 ;
dans lequel aucun solvant organique autre que ledit solvant organique miscible à l'eau moins volatil que l'eau et autre que les solvants organiques pouvant résulter de l'hydrolyse de l'époxyalcoxysilane de formule (I) n'est introduit ; de préférence dans lequel la température du mélange réactionnel pendant l'étape (i) est maintenue en dessous de 40 °C, plus préférentiellement dans lequel la quantité molaire d'eau ajoutée au mélange dans l'étape (i) est au moins égale à la quantité molaire de groupes Y dans l'époxyalcoxysilane de formule (I).

**8.** Procédé selon la revendication 7, dans lequel la transmittance dans la région des ultraviolets A, correspondant à des

longueurs d'onde comprises entre 315 nm et 380 nm, d'un échantillon de 1 cm d'épaisseur d'une dispersion des particules cationiques dans l'eau, dans lequel le poids des particules représente 2 % du poids total de ladite dispersion, est inférieure à 40 % ; plus préférentiellement, dans lequel le procédé comprend en outre l'ajout après l'étape (ii) d'un matériau absorbant les UV, encore plus préférentiellement dans lequel le matériau absorbant les UV comprend des nanoparticules inorganiques choisies parmi les nanoparticules d'oxyde de titane, les nanoparticules d'oxyde de zinc, les nanoparticules d'oxyde de cérium et leurs mélanges.

**9.** Procédé selon la revendication 7 ou 8 dans lequel :

- la somme W' = {E' + poids des particules cationiques + poids de l'acide de Lewis inorganique non hydrogéné} est comprise entre 20 % et 35 % du poids de la composition finale, dans lequel E' représente le poids de la quantité d'époxyalcoxysilane de formule (I) introduit dans l'étape (i) moins le poids des groupes Y dans ladite quantité d'époxy-alcoxysilane ;

de préférence dans lequel
- E' est compris entre 45 % et 65 % de W',
- le poids des particules cationiques est compris entre 30 % et 50 % de W' et
- le poids de l'acide de Lewis inorganique non hydrogéné est compris entre 0,1 % et 2 % de W' ;

plus préférentiellement dans lequel
- E' est compris entre 52 % et 62 % de W',
- le poids des particules cationiques est compris entre 37 % et 47 % de W' et
- le poids de l'acide de Lewis inorganique non hydrogéné est compris entre 0,2 % et 1,5 % de W'.

**10.** Procédé selon l'une quelconque des revendications 7 à 9, dans lequel la quantité d'acide de Brønsted inorganique avec un pKa dans l'eau à 25°°C inférieur à 3 à mélanger avec l'époxyalcoxysilane de formule (I) dans l'étape (i) est telle qu'elle introduit entre 0,2 mmol et 1 mmol pour 100 g de la composition finale de protons avec un pKa dans l'eau à 25°°C inférieur à 3.

**11.** Article optique comprenant un substrat portant un revêtement dur pouvant être obtenu par durcissement de la composition selon l'une quelconque des revendications 1 à 6, dans lequel le substrat comprend un plastique optique, de préférence dans lequel le plastique optique est un polymère de bis(allylcarbonate) de diéthylène glycol, une résine de polythiouréthane thermodurcissable ayant un indice de réfraction de 1,60 ou une résine de polythiouréthane thermodurcissable ayant un indice de réfraction de 1,67.

**12.** Article optique selon la revendication 11, dans lequel l'article comprend un revêtement primaire sur lequel le revêtement dur est déposé directement, ledit revêtement primaire comprenant du polyuréthane et une charge inorganique ; de préférence dans lequel ladite charge inorganique comprend des nanoparticules de silice.

**13.** Article optique selon la revendication 11 ou 12, dans lequel l'article comprend en outre au moins un revêtement anti-réfléchissant sur la surface du revêtement dur, de préférence dans lequel l'article comprend en outre au moins un revêtement anti-salissure sur la surface dudit revêtement anti-réfléchissant.

**14.** Article optique selon l'une quelconque des revendications 11 à 13, dans lequel l'article optique est une lentille ophtalmique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0614957 A
- US 9957398 A
- US 6399211 B
- US 20020022682 A
- WO 2013013929 A
- EP 2524798 A
- EP 2033021 A
- US 6183872 B